**Europäisches Patentamt**

**European Patent Office**

**Office européen des brevets**

(19)

(11) Veröffentlichungsnummer: **0 121 168**
**A1**

(12) # EUROPÄISCHE PATENTANMELDUNG

(21) Anmeldenummer: **84102973.9**

(22) Anmeldetag: **17.03.84**

(51) Int. Cl.³: **F 16 H 5/74**

(30) Priorität: **30.03.83 PC T/EP83/00095**

(43) Veröffentlichungstag der Anmeldung:
**10.10.84 Patentblatt 84/41**

(84) Benannte Vertragsstaaten:
**DE GB SE**

(71) Anmelder: **ZAHNRADFABRIK FRIEDRICHSHAFEN AKTIENGESELLSCHAFT**
**Löwentaler Strasse 100 Postfach 2520**
**D-7990 Friedrichshafen 1(DE)**

(72) Erfinder: **Holtermann, Otto**
**Rosenstrasse 35**
**D-7994 Langenargen(DE)**

(54) **Schalteinrichtung.**

(57) Schalteinrichtung zum halb- oder vollautomatischen Schalten von mehrstufigen Zahnradwechselgetrieben mit mechanischer Synchronisierung, insbesondere für Kraftfahrzeuge mit einem elektrisch/elektronischen Steuerteil, wobei der Gangwechsel an einem Steuergerät von Hand auslösbar ist oder automatisch veranlaßt wird, mit rein elektrischen Steuer- und Stelleinrichtungen oder mit Stellkolben, Steuerventilen oder auch Magnetventilen für die Bewegung der bei einem Gangwechsel zu verschiebenden Getriebe- und Kupplungsteile, wobei vom Fahrer aus an einem Steuergerät wahlweise die automatische wie auch Handservoschaltung vorgewählt werden kann und wobei im automatischen Betrieb der nach einem HH-Schaltbild bei Handschaltung geführte Handschalthebel nachgeführt wird und wobei das Steuergerät noch einen Programmschalter für den automatischen Betrieb und einen elektrischen Schalter oder ein Vorsteuerventil für die Umschaltung auf eine schnelle bzw. langsame Splitgruppe aufweist.

FIG.1

EP 0 121 168 A1

ZAHNRADFABRIK FRIEDRICHSHAFEN
Aktiengesellschaft
Friedrichshafen

TZS/pz-hg
0121168 F
24.03.1983

Diese Erfindung betrifft eine Schalteinrichtung nach dem Oberbegriff von Anspruch 1, wobei die für den halbautomatischen und auch für den vollautomatischen Betrieb vorgesehenen Schalteinrichtungsteile sowohl rein elektrisch mit Magnetschaltern, aber auch elektrohydraulisch oder elektropneumatisch mit Magnetventilen und Stellkolben ausgelegt sein können.

Auch die mit mechanischer Synchronisiereinrichtung versehenen Zahnradwechselgetriebe können aus nur einem Grundgetriebe bestehen, aber auch zur Erzielung von zusätzlichen Gängen noch mit einer Bereichs- und/oder Splitgruppe erweitert sein und schließlich können sowohl das Grundgetriebe wie auch die Bereichs- und Splitgruppe wahlweise in Vorgelege- bzw. Planetenbauweise ausgeführt sein.

Aus der DE-AS 20 36 732 ist eine Vorrichtung zum synchronisierten Schalten von Stufenwechselgetrieben bekannt. Die Antriebsleistung wird über eine Anfahr- und Trennkupplung vom Motor auf das in Vorgelegebauart ausgeführte Stufenwechselgetriebe übertragen. Der Gleichlauf der zu schaltenden Kupplungen wird über eine Zentralsynchronisierung erreicht. Über ein elektrisches Steuergerät und einen Gangvorwähler wird z. B. eine halbautomatische Schaltung ermöglicht, wobei die Steuerung ausschließlich elektrisch und die Betätigung zur Gangverstellung hydraulisch vorgenommen wird. Ein Beispiel für eine vollautomatische Lösung ist nicht dargestellt.

Aus der DE-AS 21 36 960 ist eine Schaltvorrichtung für das halb- oder vollautomatische Schalten eines mehrstufigen Zahnradwechselgetriebes mit einer mechanischen Synchronisierung, die den Schaltkupplungen zugeordnet ist, bekannt. Die Schaltung erfolgt elektrohydraulisch und wird von einem elektrischen oder elektronischen Steuerteil über Steuerventile bewirkt, wobei beim halbautomatischen Schalten Drucktasten für die Vorwahl des jeweils einzuschaltenden Ganges bzw. der zu schaltenden Getriebestufe sowie eine Drucktaste zum Auslösen des vorgewählten Schaltvorganges vorhanden sind.

ZAHNRADFABRIK FRIEDRICHSHAFEN
Aktiengesellschaft
Friedrichshafen

2

TZS/pz-hg
0121168    F
24.03.1983

Beim vollautomatischen Betrieb wird das Steuerteil mit Signalen aus dem Betriebszustand des zugehörigen Kraftfahrzeuges beaufschlagt, z. B. der Motordrehzahl und der Gaspedalstellung sowie der Stellung der Schaltmuffen und der zwischen Motor und Getriebe vorgesehenen Kupplungen.

Allen bekannten Getrieben, die automatisch ausgelegt sind, ist gemeinsam, daß der Fahrer bis auf den Kick-down und die Vorwahl bestimmter Gangbereiche, die nur automatisch geschaltet werden sollen, keine Eingriffsmöglichkeiten hat.

Dies ist besonders im Schwerlastverkehr und im bergigen Gelände kritisch, wenn die Automatik in einem Zeitpunkt schaltet, in dem ein erfahrener und umsichtiger Fahrer nicht schalten würde. Bei Automatgetrieben in Vorgelegebauweise, die zur Schaltung noch eine Trennkupplung haben und der Gangwechsel mit einer, wenn auch kurzen, Zugkraftunterbrechung erfolgt, kann eine solche, nicht gewollte Schaltung gefährlich sein.

Die Anpassung des Fahrzustandes, besonders bei einem schweren Kraftfahrzeug, an den Fahrzeugantrieb ist mit einem vielgängigen, in Vorgelege- und Gruppenbauweise ausgeführten Zahnradwechselgetriebe sehr gut gelöst. Trotz günstiger Gestaltung der Schalteinrichtungen mit Schalterleichterungen für den Fahrer, z. B. HH- und Splitschaltungen am Schalthebel, werden vom Fahrer nur selten alle günstigen Anpassungen, die möglich sind, auch ausgenutzt.

Ausgehend von der letztgenannten Schrift ist es deshalb Aufgabe der Erfindung, eine Schalteinrichtung nach dem Oberbegriff von Anspruch 1 so zu verbessern, daß der Fahrer trotz optimaler Anpassung des Fahrzeuges an den Antriebsmotor mit einem Vielganggetriebe vom Schaltaufwand maximal entlastet wird und im Bedarfsfall in die Übersetzung im Antriebsstrang eingreifen kann, so daß bei einer möglichen, in bezug auf die Wirtschaftlichkeit optimalen Fahrweise auch eine hohe Sicherheit durch einen schnellen Eingriff des Fahrers ermöglicht wird.

Diese Aufgabe wird mit den kennzeichnenden Merkmalen von Anspruch 1 erfüllt.

Infolge der Nachführung des Gangschalthebels im automatischen Betrieb erkennt der Fahrer nicht nur den jeweils geschalteten Gang, was für einen evtl. Eingriff, besonders bei einem automatisch geschalteten Vielganggetriebe, wichtig ist, sondern er kann auch in der ihm geläufigen Weise den Ganghebel, je nach Erfordernis, in einem H- oder HH-Schaltbild betätigen. Der elektrische Umschalter von Automatik auf Handschaltung und umgekehrt, z. B. am Steuergerät in Verbindung mit dem nachgeführten Gangschalthebel, ergeben eine hohe Bedienungserleichterung bei einer gleichzeitig schnellen Eingriffsmöglichkeit. Ein so ausgerüstetes Fahrzeug wird damit allen, auch den schwierigen Verkehrsbedingungen gerecht. Die Zusammenfügung eines bei einem Automatgetriebe an sich bekannten Gangwahlschalters mit einem Schalthebel, wie er aus Handschaltgetrieben bekannt ist, ergibt auch eine kompakte, bedienungsgerechte und einfache Lösung für so eine Schalteinrichtung.

In den Ansprüchen 2 bis 8 wird die Erfindung besonders vorteilhaft ausgestaltet.

Für den Zeitraum, in dem der Fahrer von Hand schaltet, kann es auch von Vorteil sein, in einer optischen Ganganzeige nach Anspruch 2 den Gang anzuzeigen, der von der Automatik unter Berücksichtigung des noch vorgewählten Gangbereiches oder der vorgewählten Schaltpunkte geschaltet wäre.
Besonders dann, wenn der Fahrer die Absicht hat, wieder auf Automatik umzuschalten, kann diese Anzeige auch zu einer Überprüfung des vorgewählten Bereiches und zur besseren Heranführung an den von der Automatik gewählten Gang per Handschaltung beitragen.

Die Anbringung von aktiven Sperren im Bereich des Gangschalthebels nach Anspruch 3 verhindert nicht nur unzulässige, z. B. Rückschaltungen und damit ein Übertouren des Antriebsmotors, son-

ZAHNRADFABRIK FRIEDRICHSHAFEN
Aktiengesellschaft                    4
Friedrichshafen

TZS/pz-hg
0421568    F
24.03.1983

dern gewährleistet auch die dauernde Übereinstimmung der Stellung
des Ganghebels mit dem jeweils geschalteten Gang, was wiederum zur
Bedienungsvereinfachung beiträgt.

Die Betätigung der Anfahr- und Trennkupplung im Handschaltbetrieb, ausschließlich durch den Gangschalthebel nach Anspruch 4,
führt zu einer weiteren Schaltvereinfachung, weil kein Kupplungspedal, was vom Fahrer aus bedient werden muß, mehr notwendig ist.
Die weiche Einkuppelung kann rein elektronisch nach Anspruch 5 wie
auch nach Anspruch 6 fliehkraftabhängig über Druckmittel erfolgen.

Die Schalteinrichtung kann in bezug auf die aktive Verstellung im Getriebe und in der Kupplung bei Gangumschaltungen nach
Anspruch 7 elektromagnetisch erfolgen, so daß sich für die gesamte
Schalteinrichtung eine rein elektrisch/elektronisch wirkende Anlage ergibt.

Es ist aber auch möglich, alle aktiven Verstellungen nach Anspruch 8 über Druckmittel, also pneumatisch oder hydraulisch, zu
bewirken. Selbstverständlich sind auch alle Zwischenlösungen möglich, so daß sich in bezug auf den Aufwand und im Zusammenhang mit
den geforderten Bedingungen nicht zuletzt, bezogen auf die Sicherheit, für eine solche Schalteinrichtung gut angepaßte Schaltbedingungen ergeben.

Weitere Einzelheiten der Erfindung werden anhand eines Ausführungsbeispieles und anhand von Zeichnungen erläutert, wobei die
Einzelheiten der Zeichnung Gegenstand der Erfindung sind. Es
zeigen:

Fig. 1     eine Schalteinrichtung in schematischer Dar-
           stellung;

Fig. 2     den Handschalthebel im Zusammenhang mit einem HH-
           Schaltbild.

ZAHNRADFABRIK FRIEDRICHSHAFEN
Aktiengesellschaft
Friedrichshafen

TZS/Dr-ng
0121168 F
24.03.1983

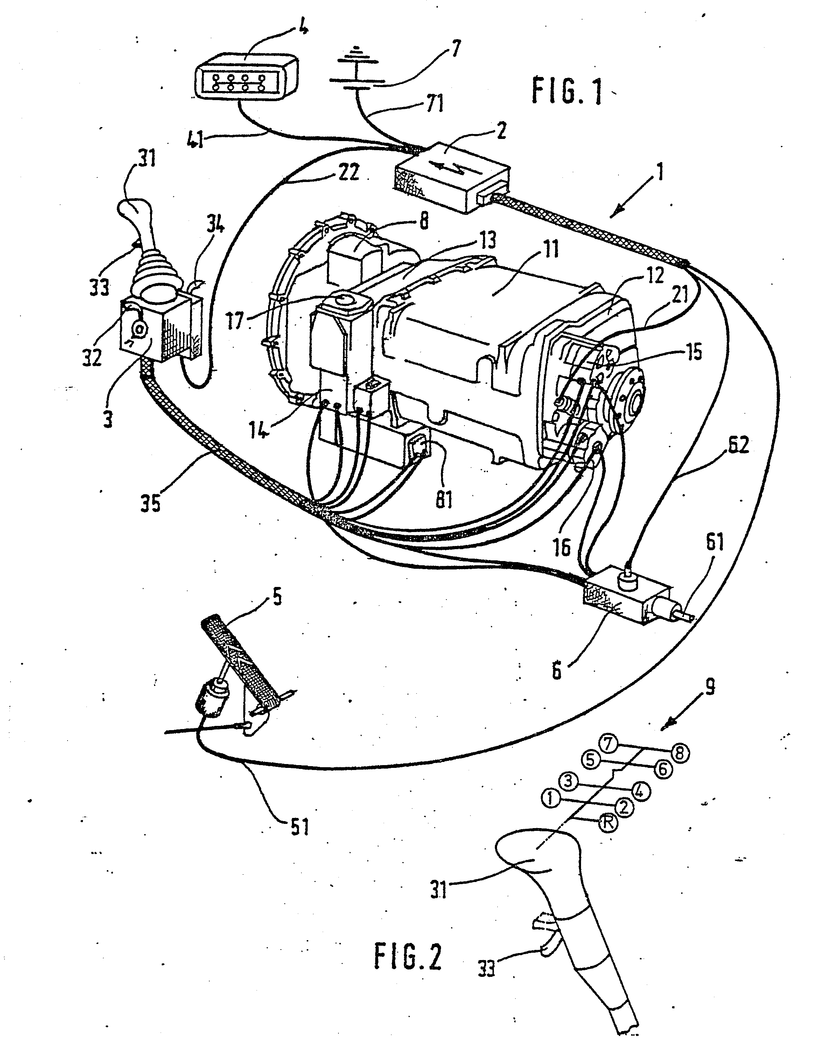

In Fig. 1 ist mit 1 das mehrstufige Zahnradwechselgetriebe
mit 4 Gängen im Grundgetriebe 11, einem nachgeschalteten Gruppengetriebe 12 mit zwei Bereichen und einer am Getriebeeingang angeordneten Splitgruppe 13 dargestellt, so daß sich, wie bekannt, 16
schaltbare Vorwärtsgänge ergeben. Die durch das Gruppengetriebe 12
verdoppelten Gänge des Grundgetriebes 11, also 8 Gänge, lassen
sich nach dem bekannten HH-Schema schalten (siehe Fig. 2). Durch
die Splitgruppe ist eine nochmalige Verdoppelung der Gänge möglich,
so daß sich eine schnelle und eine langsame Gruppe von jeweils
8 Gängen ergeben, die mit dem elektrischen Schalter oder dem Vorsteuerventil 33 am Gangschalthebel 31 wechselweise vorgewählt werden können.

2 ist ein elektrisches Steuerteil mit Leitungen 71 zu einer Stromquelle 7 (Batterie), 51 zum Fahrhebel 5 (Gaspedal), 21 zur Erfassung der Getriebeabtriebsdrehzahl, 41 zur Ganganzeige 4 und 22 zum
Steuergerät 3. Dieses Steuergerät kann mit den Betätigungseinrichtungen 14, 15, 16, 17, 81 für das Grundgetriebe 11 - z. B. an der
Drehwelle oder auch an den Schaltmuffen selbst -, Gruppen- und
Splitgetriebe 12, 13 und für die Anfahr- und Trennkupplung 8 sowohl über elektrische wie auch über Druckmittelleitungen 35 verbunden sein. Ist z. B. die Schalteinrichtung elektro-pneumatisch
ausgelegt, so ist noch eine Druckluftquelle 61 mit einem Be- und
Entlüftungsventil 6 notwendig, wobei dessen Steuerung z. B. über
die Leitungen 62 vom elektronischen Steuerteil 2 aus erfolgen kann.
Ist der Schalter 32 auf Automatik gestellt und ein entsprechendes
Programm vorgewählt (Programmschalter 34), werden alle Schaltungen
im Vorwärtsfahrbereich allein vom elektronischen Steuerteil 2 aus,
z. B. drehzahl- und fahrzustandsabhängig, wie bekannt, gesteuert.
Dabei wird parallel zu den Verstelleinrichtungen 14, 15 für das
Grund- und Gruppengetriebe 11, 12 der Gangschalthebel 31 über eine
im Steuergerät 3 befindliche Verstelleinrichtung (nicht gezeichnet) den geschalteten Gängen entsprechend nachgeführt. Der Fahrer
kann aus der Stellung dieses Gangschalthebels in der HH-Kulisse
(Fig. 2) jeden gerade geschalteten Gang leicht erkennen oder nachfühlen. Mit dem Schalter oder Vorsteuerventil 33 am Gangschalthebel 31 kann die schnelle und langsame Splitgruppe vorgewählt aber auch gleich geschaltet werden, wobei bei einer Vorwahl die
Schaltung selbst, z. B. mit dem Gaspedal, ausgelöst werden könnte,
so daß durch die Automatik nur jeweils maximal 8 Gänge geschaltet
werden müssen. Selbstverständlich ist es auch möglich, die Automatik so auszulegen, daß alle 16 Gänge einbezogen werden und daß nur
bei Handschaltung das Vorsteuerventil oder der elektrische Schalter 33 wirkt.

Wird der Schalter 32, der auch z. B. am Gangschalthebel 31 oder am
Armaturenbrett angeordnet sein kann, auf Handbetrieb umgestellt,
so erfolgt keine automatische Schaltung mehr, sondern alle Gangwechsel müssen über den Handschalthebel 31 nach dem HH-Schema und
über den Schalter oder das Vorsteuerventil 33 - für die Splitgruppe - in bekannter Weise vom Fahrer selbst ausgelöst werden.
An der Ganganzeige 4 kann der Fahrer jedoch den Gang ablesen, den
die Automatik in dem jeweiligen Zeitpunkt schalten würde, wenn
nicht auf Handschaltung umgestellt wäre, so daß ein Heranführen an
diesen Gang, z. B. vor erneuter Umstellung auf Automatik, leicht
möglich ist. Die Ganganzeige 4 kann dabei immer oder nur im Handschaltbetrieb eingeschaltet sein.

Eine andere vorteilhafte Variante ermöglicht einerseits die
Schaltung aller Gänge automatisch und bei Betätigen des Schalters 32 auf Handbetrieb können die Gänge des Grundgetriebes und
der Nachschaltgruppe, also 8 Gänge nach dem HH-Schaltbild, durch
den Fahrer gewählt werden, die Splitgruppe ist dabei

- : entweder außer Betrieb
- oder wird weiterhin von der Automatik ohne Einfluß des
    Fahrers betätigt.

Bei dieser Lösung kann das Vorsteuerventil 33 entfallen.
Der Programmschalter 34 kann ein allgemein bekannter Wählhebel
wie bei einem Automatgetriebe, z. B. mit den Stellungen P - R - N
- D - 2 - 1, aber auch vereinfacht, in z. B. mit Programmen nur
für den Vorwärtsfahrbereich vorgesehen sein.
Alle Handschaltungen erfolgen über eine Hilfskraft mit einem Geber
im Steuergerät 3 und Nehmern 14, 15, 16, 81 am Getriebe 1 und der
Anfahr- und Trennkupplung 8.

ZAHNRADFABRIK FRIEDRICHSHAFEN
Aktiengesellschaft
Friedrichshafen

TZS/pz-hg
EP 0121168 F
24.03.1983

## Bezugszeichen

| | | | |
|---|---|---|---|
| 1 | Mehrstufiges Zahnradwechselgetriebe | 33 | Elektrischer Schalter/ Vorsteuerventil |
| 11 | Grundgetriebe | 34 | Programmschalter |
| 12 | Gruppengetriebe | 35 | Leitungen (elektrisch oder Druckmittel) |
| 13 | Splitgruppe | | |
| 14 | Verstelleinrichtung für Drehwelle | 4 | Ganganzeige |
| 15 | Verstelleinrichtung für Gruppengetriebe | 41 | Leitung |
| | | 5 | Fahrhebel (Gaspedal) |
| 16 | Verstelleinrichtung für Splitgetriebe | 51 | Leitung |
| | | 6 | Be- und Entlüftungsschaltventil |
| 17 | Drehwelle | | |
| 2 | Elektronisches Steuerteil | 61 | Druckmittelanschluß |
| 21 | Leitungen | 62 | Leitung |
| 22 | Leitungen | 7 | Stromquelle (Batterie) |
| 3 | Steuergerät | 71 | Leitung |
| 31 | Gangschalthebel | 8 | Anfahr- und Trennkupplung |
| 32 | Elektrischer Schalter Automatik/Hand | 81 | Betätigungseinrichtung |
| | | 9 | HH-Schaltkulisse |

ZAHNRADFABRIK FRIEDRICHSHAFEN
Aktiengesellschaft
Friedrichshafen

TZS/pz-hg
0121168    F
24.03.1983

Schalteinrichtung

A n s p r ü c h e

1. Schalteinrichtung zum halb- oder vollautomatischen Schalten von mehrstufigen Zahnradwechselgetrieben mit mechanischer Synchronisierung, insbesondere für Kraftfahrzeuge, mit einem elektrisch/elektronischen Steuerteil, wobei der Gangwechsel an einem Steuergerät von Hand auslösbar ist oder automatisch veranlaßt und selbsttätig gesteuert wird, mit Steuer- und Stelleinrichtungen zur Bewegung der bei den Gangwechseln zu verschiebenden Getriebe- und Kupplungsteile, dadurch  g e k e n n z e i c h n e t ,  daß das Steuergerät (3) eine elektrische Umschalteinrichtung (32) zur wahlweisen Umschaltung zwischen einer vollautomatischen und einer Hand-Servoschaltung und einem im automatischen Bereich wirkenden Programmschalter (34) zur Vorwahl bestimmter Gangbereiche und/oder Gangumschaltpunkte aufweist, ein Gangschalthebel (31) der jedem im automatischen Betriebsbereich geschalteten Gang in einer H- oder HH-Schaltkulisse nachgeführt wird und dem Fahrer den jeweils geschalteten Gang anzeigt oder nachfühlen läßt und im Bereich für Handservoschaltung beim Verstellen dieses Gangschalthebels (31) die Betätigungen der Gangschaltkupplungen im Getriebe (1) und der Trennkupplung (8), die zwischen dem Motor und dem Getriebe (1) angeordnet ist, bewirkt und daß im oder am Steuergerät (3), vorrangig am Gangschalthebel (31), noch ein elektrischer Schalter oder ein Vorsteuerventil (33) angeordnet ist, mit dem eine langsame bzw. schnelle Gruppe geschaltet werden kann.

2. Schalteinrichtung nach Anspruch 1, dadurch  g e k e n n z e i c h n e t ,  daß dem Fahrer beim Handschaltbetrieb an einer Ganganzeige (4) der durch die Automatik (elektronisches Steuerteil 2) ermittelte günstigste Gang im vom Programmschalter (34) vorgewählten Bereich angezeigt wird.

3. Schalteinrichtung nach Anspruch 2, dadurch  g e k e n n -
z e i c h n e t ,  daß unzulässige Hoch- und vor allem Rückschaltungen im Bereich des Handschalthebels (31) im Steuergerät (3)
aktiv gesperrt sind.

4. Steuereinrichtung nach einem der Ansprüche 2 oder 3, dadurch  g e k e n n z e i c h n e t ,  daß die Betätigung der Anfahr- und Trennkupplung (8) ausschließlich vom Gangschalthebel (31)
aus bewirkt wird.

5. Steuereinrichtung nach Anspruch 4, dadurch  g e k e n n -
z e i c h n e t ,  daß das Schließen der Anfahr- und Trennkupplung (8) verzögert in Abhängigkeit von der Drehzahl und des Fahrzustandes über elektrisch/elektronische Erfassungs- und Regeleinrichtungen erfolgt.

6. Schalteinrichtung nach Anspruch 5, dadurch  g e k e n n -
z e i c h n e t ,  daß das Schließen der Anfahr- und Trennkupplung (8) verzögert und in Abhängigkeit von der Drehzahl und dem
Fahrzustand über vorrangig in der Kupplung selbst angeordnete,
hydraulisch wirkend und fliehkraftabhängige Einrichtungen erfolgt.

7. Schalteinrichtung nach einem der vorgenannten Ansprüche,
dadurch  g e k e n n z e i c h n e t ,  daß die Verschiebung der
Getriebe- und Kupplungsteile bei einem Gangwechsel ausschließlich
mit elektromagnetischen Stelleinrichtungen erfolgt.

8. Schalteinrichtung nach einem der Ansprüche 1 bis 7, dadurch  g e k e n n z e i c h n e t ,  daß die Verschiebung der
Getriebe- und Kupplungsteile bei einem Gangwechsel von druckmittelbeaufschlagten Stellzylindern vorgenommen wird, wobei die
Druckmittelsteuerung sowohl über Magnetventile wie auch über
druckmittelbeaufschlagte Schaltventile erfolgen kann.

0121168

FIG.1

FIG.2

75 50515

))) Europäisches
Patentamt

# EUROPÄISCHER RECHERCHENBERICHT

| EINSCHLÄGIGE DOKUMENTE | | | EP 84102973.9 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR - A - 2 448 077 (PONT-A-MOUSSON) <br> * Gesamt * <br> -- | 1 | F 16 H 5/74 |
| A | AT - B - 305 789 (VEB IFA) <br> * Seite 3, Zeilen 11-14; Fig. 2; Seite 2, Zeilen 1-4 * <br> -- | 1,8 | |
| A | DE - A - 1 930 046 (ARDIE-WERK) <br> * Seite 17, Absatz 2; Fig. 1 * <br> -- | 2 | |
| A | FR - A - 2 060 641 (DAIMLER) <br> * Gesamt * <br> -- | 3 | |
| A | GB - A - 1 101 525 (DANA CORPORA-TION) <br> * Gesamt * <br> -- | 4 | RECHERCHIERTE SACHGEBIETE (Int. Cl. 3) |
| A | DE - A1 - 2 401 101 (KOMATSU) <br> * Gesamt * <br> -- | 5,6 | B 60 K 20/00 <br> B 60 K 41/00 <br> F 16 H 5/00 |
| A | DE - C - 815 881 (SIPER S.A.) <br> * Gesamt * <br> -- | 7 | |
| A | US - A - 1 924 128 (MAYBACH) <br> * Gesamt * <br> -- | 8 | |

Der vorliegende Recherchenbericht wurde für alle Patentansprüche erstellt.

| Recherchenort | Abschlußdatum der Recherche | Prüfer |
|---|---|---|
| WIEN | 25-05-1984 | SCHATEK |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503. 03.82

| | **EINSCHLÄGIGE DOKUMENTE** | | KLASSIFIKATION DER ANMELDUNG (Int Cl ⁴) |
|---|---|---|---|
| Kategorie | Kennzeichnung des Dokuments mit Angabe, soweit erforderlich, der Maßgeblichen Teile | betrifft Anspruch | |
| A | US - A - 1 991 694 (PETERSON) <br> * Gesamt * <br> -- | | |
| A,D | DE - B2 - 2 036 732 (BOSCH) <br> * Gesamt * <br> -- | | |
| A,D | DE - A - 2 136 960 (ARDIE-WERK) <br> * Gesamt * <br> ---- | | |
| | | | RECHERCHIERTE SACHGEBIETE (Int Cl.³) |

EPA Form 1503.2   06.78